(19) Europäisches Patentamt / European Patent Office / Office européen des brevets

(11) **EP 2 194 367 B1**

(12) **FASCICULE DE BREVET EUROPEEN**

(45) Date de publication et mention
de la délivrance du brevet:
**18.06.2014 Bulletin 2014/25**

(21) Numéro de dépôt: **09290855.7**

(22) Date de dépôt: **10.11.2009**

(51) Int Cl.:
*G01M 11/02* *(2006.01)*    *G01B 11/255* *(2006.01)*
*B24B 13/005* *(2006.01)*    *G02C 13/00* *(2006.01)*
*B24B 49/12* *(2006.01)*

(54) **Dispositif et procédé pour mesurer une caractéristique géométrique de courbure d'une lentille ophtalmique**

Vorrichtung und Methode zur Bestimmung eines geometrischen Krümmungsmerkmals einer ophthalmischen Linse

Device and method for measuring a geometric characteristic of the curvature of an ophthalmic lens

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **02.12.2008 FR 0806761**

(43) Date de publication de la demande:
**09.06.2010 Bulletin 2010/23**

(73) Titulaire: **Essilor International (Compagnie Générale d'Optique) 94220 Charenton-le-Pont (FR)**

(72) Inventeurs:
• **Boutinon, Stéphane**
**94220 Charenton-le-Pont (FR)**
• **Pinault, Philippe**
**94220 Charenton-le-Pont (FR)**

(74) Mandataire: **Chauvin, Vincent et al Coralis 14/16, rue Ballu 75009 Paris (FR)**

(56) Documents cités:
EP-A- 1 605 241    DE-A1- 10 231 343
FR-A- 2 879 736    FR-A- 2 880 118
US-A- 5 855 074    US-A1- 2003 015 649
US-A1- 2007 146 687    US-A1- 2007 273 870

**Description**

DOMAINE TECHNIQUE AUQUEL SE RAPPORTE L'INVENTION

La présente invention concerne le domaine de la métrologie optique, et porte plus particulièrement sur un dispositif pour déterminer au moins une caractéristique géométrique relative à la courbure d'une lentille ophtalmique.
Ce dispositif peut avantageusement être intégré dans les appareils utilisés par les opticiens pour réaliser le montage des lentilles ophtalmiques dans une monture de lunettes, tels que les appareils de lecture de contour de monture ou de lentilles de présentation ou les appareils de centrage optique et de blocage d'une lentille ophtalmique.

ARRIÈRE-PLAN TECHNOLOGIQUE

La connaissance de la courbure d'une lentille ophtalmique est importante pour réaliser le montage de cette lentille ophtalmique dans une monture de lunettes. Cette information est notamment utilisée pour réaliser différentes étapes de ce montage, comme le centrage de la lentille ophtalmique dans la monture, la gestion des cycles de palpage de la lentille ophtalmique, le perçage ou le chanfreinage de la lentille ophtalmique, la mesure de la puissance de cette lentille ophtalmique et la correction prismatique (qui corrige les effets prismatiques du verre).
Il peut s'avérer également important de vérifier la compatibilité entre la courbure de la lentille ophtalmique et la courbure de la monture sur laquelle elle est destinée à être montée ou d'analyser la différence de courbure entre les lentilles ophtalmiques gauche et droite d'une même paire de lunettes.
Enfin, cette information permet à l'opticien de vérifier à la réception d'une lentille commandée que la courbure de la lentille reçue correspond bien à la courbure souhaitée.
Actuellement, la courbure de la lentille ophtalmique est mesurée grâce à un appareil dédié appelé sphéromètre. Le principe d'un tel sphéromètre est par exemple décrit dans le document US2052153. Cette mesure impose cependant une manipulation assez longue de la lentille ophtalmique, ce qui augmente les risques de l'endommager. Elle nécessite de plus l'utilisation d'un appareil dédié. Enfin, l'utilisation d'un tel sphéromètre donne une mesure de la courbure peu reproductible, car la précision de la valeur de la courbure mesurée dépend du positionnement du sphéromètre sur la lentille ophtalmique, et notamment d'une inclinaison transversale du sphéromètre par rapport à la lentille ophtalmique pendant la mesure.
Il existe également des appareils de mesure, par exemple des appareils de lecture de contour ou de centrage, intégrant un sphéromètre, tel le produit commercialisé sous la marque « Opera Scan » par la société Indo. Cependant, ces appareils de mesure présentent une conception complexe et nécessitent une manipulation spécifique de la lentille ophtalmique.
On connaît également du document EP1605241 un dispositif adapté à la détermination de la courbure d'une lentille conforme au préambule de la revendication 1.

OBJET DE L'INVENTION

Le but de la présente invention est de proposer un dispositif simple et de coût faible permettant la détermination automatique de la courbure d'une lentille ophtalmique après un temps de manipulation réduit et avec une précision acceptable, sans contact avec la lentille ophtalmique et donc sans risque d'abîmer celle-ci.
A cet effet, on propose selon l'invention un dispositif selon la revendication 1.
Le dispositif selon l'invention peut ainsi avantageusement être intégré à un appareil de lecture du contour de la lentille ophtalmique ou à un appareil de centrage et fournit de manière automatique, sans contact avec elle, une mesure précise de la courbure de la lentille ophtalmique par une manipulation simple et rapide. Les risques d'endommagement de la lentille ophtalmique lors de cette mesure sont ainsi réduits.
Une première caractéristique avantageuse du dispositif selon l'invention est définie par la revendication 2. L'écran de projection permet avantageusement de visualiser les ombres portées du repère éclairé sous au moins deux directions d'éclairement différentes. Les moyens d'acquisition réalisent alors par exemple simplement une ou plusieurs captures d'image de cet écran de projection.
Un mode de réalisation avantageux est défini par les revendications 3 et 4. Deux sources lumineuses ponctuelles permettent d'éclairer de façon simple et peu coûteuse ladite lentille ophtalmique sous deux directions d'éclairement différentes. La collimation de chaque source permet avantageusement de l'éloigner à l'infini du point de vue optique : après sa collimation, chacune des deux sources est équivalente à une source émettant un faisceau de lumière parallèle suivant une direction donnée. Chacune des deux sources éclaire alors le repère de la lentille sous une direction d'éclairement unique. Cette étape sera décrite plus en détail ultérieurement.
Un autre mode de réalisation avantageux est défini par la revendication 5. La source lumineuse présentant une étendue importante, elle éclaire le repère de la lentille ophtalmique sous différentes directions d'éclairement.

Une autre caractéristique avantageuse du dispositif selon l'invention est définie par la revendication 6. La précision de la mesure ainsi obtenue de la courbure de la lentille ophtalmique est améliorée.

Une autre caractéristique avantageuse du dispositif selon l'invention, est définie par la revendication 7. Le dispositif réalise par exemple directement la comparaison de la valeur de la courbure de la lentille ophtalmique mesurée avec sa valeur annoncée par le fabriquant, commandée par l'opticien, ou avec une valeur prédéterminée en fonction de la monture choisie par le porteur. L'opticien peut ainsi s'assurer que la lentille ophtalmique pourra être montée dans la monture choisie en tenant compte par exemple de la souplesse de celle-ci.

Une autre caractéristique avantageuse du dispositif selon l'invention, est définie par la revendication 8. Le seuil prédéterminé peut en particulier être déterminé en fonction du matériau de la monture. Ainsi, si la valeur de la courbure de la lentille ophtalmique mesurée est par exemple incompatible avec un montage sur la monture choisie, l'opticien est automatiquement alerté.

L'invention concerne également un procédé selon la revendication 9.

Un tel procédé est mis en oeuvre de manière simple et ne requiert que peu de manipulation de la lentille ophtalmique.

Une première caractéristique avantageuse du procédé selon l'invention est définie par la revendication 10. Les positions des ombres portées sur l'écran de projection sont précisément déterminées par traitement d'image et permettent une détermination rapide et précise de la valeur de la courbure de la lentille ophtalmique.

Différentes variantes d'exécution sont définies par les revendications 11 à 13.

Grâce au mode de mise en oeuvre de la revendication 11, l'opticien n'a qu'un seul repère à placer, de manière simple et rapide.

Grâce au mode de mise en oeuvre de la revendication 13, l'opticien peut choisir les repères de façon aléatoire sans se préoccuper de leur position relative ou de leur position sur la lentille.

De plus, l'opticien peut alors utiliser des repères intégrés à la lentille ophtalmique, comme par exemple les marques dites de montage des lentilles ophtalmiques progressives ménagées sur la lentille pour repérer son référentiel optique. Il n'est pas alors nécessaire d'ajouter d'autres repères sur la lentille ophtalmique.

Une autre caractéristique avantageuse du procédé selon l'invention, est définie par la revendication 14. L'opticien est informé de manière rapide et automatique d'un problème d'incohérence de la valeur de la courbure de la lentille ophtalmique mesurée avec sa valeur attendue ou avec la valeur de la courbure d'une lentille acceptable par une monture donnée.

DESCRIPTION DÉTAILLÉE D'UN EXEMPLE DE RÉALISATION

La description qui va suivre, en regard des dessins annexés, donnée à titre d'exemple non limitatif, fera bien comprendre en quoi consiste l'invention et comment elle peut être réalisée.

Sur le dessin annexé :

- la figure 1 est une vue schématique de profil du dispositif selon l'invention,
- la figure 2 est une vue schématique éclatée de dessus d'une partie du dispositif de la figure 1.

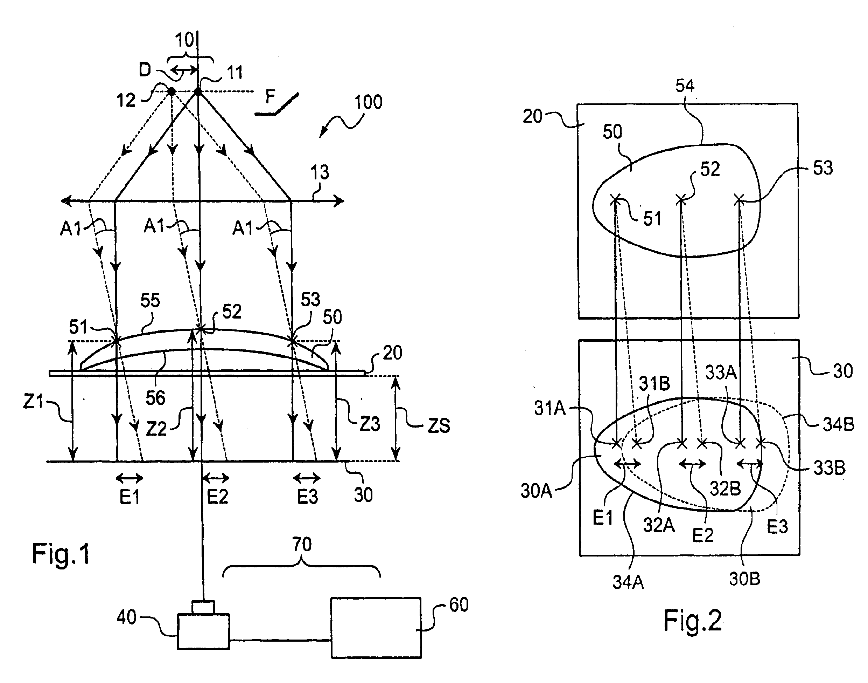

Comme le montre la figure 1, le dispositif 100 pour mesurer au moins une caractéristique géométrique relative à la courbure d'une lentille ophtalmique selon l'invention comporte ici un support 20 qui accueille une lentille ophtalmique 50.

Ce support 20 est ici formé d'une plaque transparente et suffisamment fine pour que les rayons lumineux qui la traversent soient peu déviés. Elle est réalisée par exemple en verre ou en matière plastique transparente.

Ici, la lentille ophtalmique 50 est posée directement sur le support 20. Alternativement, on peut prévoir un trépied intermédiaire reposant sur ledit support et qui accueille la lentille ophtalmique.

Ce support peut également être muni de motifs sérigraphiés ou comporter des motifs activables et désactivables. Il peut s'agir dans ce dernier cas d'un écran du type LCD ou équivalent. La présence de ces motifs permet de mesurer les caractéristiques de puissance, de centrage et/ou d'axage de ladite lentille ophtalmique, comme cela est décrit par exemple dans le document FR2878979 ou dans son équivalent US2007273870.

La lentille ophtalmique 50 est munie d'au moins un repère 51, 52, 53.

Dans l'exemple représenté sur la figure 1, elle est munie sur sa face avant 55 de trois repères 51, 52, 53 alignés selon l'un de ses méridiens.

Ces repères 51, 52, 53 sont ici des repères provisoires réalisés par exemple par un marquage à la peinture ou par un collage de pastilles sur la face avant 55 de la lentille ophtalmique 50.

Alternativement, on peut envisager de placer les repères sur la face arrière 56 de la lentille 50.

Alternativement, les repères de la lentille ophtalmique peuvent être des repères permanents réalisés par exemple par gravure de la lentille ophtalmique. De tels repères sont par exemple déjà intégrés à la lentille ophtalmique pour repérer des zones ou des points optiquement remarquable, par exemple le centre optique de la lentille ophtalmique. Il est également par exemple possible d'exploiter les repères permanents de la lentille ophtalmique utilisés pour les mesures au frontofocomètre.

Le contour 54 (voir figure 2) de la lentille ophtalmique 50, ou les lignes de démarcation entre deux zones de focales différentes peuvent également être utilisés comme des repères permanents de cette lentille ophtalmique 50.

Du côté du support 20 qui accueille la lentille ophtalmique 50, le dispositif 100 comporte des moyens d'éclairement 10 de la lentille ophtalmique 50 selon au moins deux directions d'éclairement différentes.

Ces moyens d'éclairement 10 comportent ici deux sources lumineuses 11, 12 ponctuelles, par exemple deux diodes électroluminescentes. Elles sont placées de préférence dans un plan parallèle au support 20 de la lentille ophtalmique 50.

Une première 11 des deux sources lumineuses 11, 12 éclaire de préférence la lentille ophtalmique 50 selon une direction parallèle à l'axe optique de cette lentille.

Ces deux sources lumineuses 11, 12 sont de préférence collimatées.

Pour cela, on utilise par exemple une lentille de collimation 13 que l'on positionne de manière à ce que les deux sources lumineuses 11, 12 se trouvent dans le plan focal P de cette lentille de collimation 13. Dans ces conditions, les rayons lumineux émis par chaque source lumineuse 11, 12 et traversant la lentille de collimation 13 en émergent selon une direction qui ne dépend que de la position de chaque source lumineuse 11, 12 par rapport à l'axe optique de la lentille de collimation 13. Tous les rayons lumineux émis par une même source lumineuse 11, 12 émergent donc selon une même direction pour former un faisceau lumineux parallèle.

Les sources lumineuses 11, 12 ainsi collimatées sont équivalentes à des sources lumineuses ponctuelles placées infiniment loin de la lentille ophtalmique 50 à éclairer.

Le dispositif 100 comporte également, de l'autre côté du support 20, des moyens d'acquisition et d'analyse 70 de la lumière transmise par ladite lentille ophtalmique, qui comprennent ici une caméra 40 associée à un calculateur 60.

Le calculateur 60 consiste en l'espèce en une carte électronique conçue et programmée pour exécuter les fonctions décrites ci-après.

Un écran de projection 30 translucide, réalisé par exemple en verre dépoli, est placé entre le support 20 et la caméra 40. Cet écran de projection 30 est plan et de préférence positionné à une distance assez faible du support 20, par exemple à une distance inférieure ou égale à 50 millimètres. Il est disposé parallèlement au support 20 de la lentille ophtalmique 50.

Alternativement, on peut envisager que l'écran de projection 30 présente une surface courbée.

Comme représenté schématiquement sur la figure 2, lorsque la lentille ophtalmique 50 est éclairée par chacune des deux sources lumineuses 11, 12, une ombre 30A, 30B de cette lentille ophtalmique 50 est projetée sur l'écran 30. Cette ombre 30A, 30B portée de la lentille ophtalmique 50 comporte une ombre 31A, 32A, 33A, 31B, 32B, 33B de chaque repère 51, 52, 53 de la lentille ophtalmique 50. Elle comporte également une ombre 34A, 34B du contour 54 de la lentille ophtalmique 50.

Les moyens d'acquisition et d'analyse 70 de la lumière transmise par la lentille ophtalmique 50 sont adaptés à identifier les ombres 31A, 32A, 33A, 31 B, 32B, 33B des repères 51, 52, 53 projetées sur l'écran 30 et à déduire des positions de ces ombres 31A, 32A, 33A, 31 B, 32B, 33B une valeur mesurée d'une caractéristique géométrique relative à la courbure de la lentille ophtalmique 50.

Pour cela, des images de l'écran de projection 30 capturées par la caméra 40 sont traitées par le calculateur 60, comme exposé ci-après.

Alternativement, la caméra peut capturer directement l'ombre portée de la lentille ophtalmique, par exemple grâce à un capteur de grande taille ou par un dispositif comportant une pluralité de petits capteurs du type capteur CCD qui forment une barrette balayant une surface d'acquisition. Cette barrette de capteurs est par exemple déplacée en translation sur cette surface d'acquisition. L'ombre de la lentille ophtalmique projetée sur la surface d'acquisition balayée par la barrette de capteurs est alors directement capturée.

Selon le procédé de mesure conforme à l'invention, le calculateur 60 commande l'illumination de chaque source lumineuse 11, 12 pour éclairer la lentille ophtalmique 50 munie de ses repères 51, 52, 53 selon deux directions d'éclairement différentes.

Comme représenté schématiquement sur la figure 2, les ombres 31A, 32A, 33A projetées sur l'écran 30 des repères 51, 52, 53 éclairés par la première source lumineuse 11 (traits pleins) sont décalées par rapport aux ombres 31 B, 32B, 33B des repères 51, 52, 53 éclairés par la deuxième source lumineuse 12 (traits pointillés). De même, les ombres 34A, 34B, projetées sur l'écran de projection 30, du contour 54 de la lentille ophtalmique 50 éclairée par chacune des deux sources lumineuses 11, 12 sont décalées l'une par rapport à l'autre.

Le calculateur 60 commande la capture de deux images de l'écran de projection 30 éclairé alternativement par chacune des deux sources lumineuses 11, 12.

Une première image de cet écran de projection 30 est capturée lorsque la première source lumineuse 11 est allumée et la deuxième source lumineuse 12 est éteinte : elle comporte donc les images des ombres 31A, 32A, 33A projetées par la première source lumineuse 11. La deuxième image de l'écran de projection 30 est capturée lorsque la première source lumineuse 12 est éteinte et la deuxième source lumineuse 11 est allumée : elle comporte donc les images des ombres 31 B, 32B, 33B projetées par la deuxième source lumineuse 12.

Une seule ombre 31A, 32A, 33A, 31 B, 32B, 33B de chaque repère 51, 52, 53 est alors présente sur chaque image capturée, et la position de chaque ombre 31A, 32A, 33A, 31 B, 32B, 33B peut être déterminée très précisément.

Alternativement, on peut également prévoir que le calculateur 60 commande la capture d'une seule image de l'écran de projection 30 comportant les ombres des repères 51, 52, 53 projetées par les deux sources lumineuses 11, 12 lorsqu'elles sont allumées ensemble.

Ensuite, le calculateur 60 détermine la position des ombres 31A, 32A, 33A, 31B, 32B, 33B des repères 51, 52, 53 sur chaque image capturée par traitement de ces images.

Pour réaliser ce traitement d'image, le calculateur 60 effectue au préalable une étape de détermination de l'angle A1 existant entre les deux directions d'éclairement de la lentille ophtalmique 50.

Cet angle A1 est par exemple déterminé par calcul à partir de la position relative des deux sources lumineuses 11, 12 et de la distance focale de la lentille de collimation 13.

Les deux sources lumineuses 11, 12 étant espacées d'une distance D dans le plan focal F de la lentille de collimation 13, et la distance focale de cette lentille de collimation étant égale à f, l'angle A1 est alors déterminé en appliquant la formule suivante : A1= atan (D/f) (où atan représente la fonction inverse de la fonction tangente).

Alternativement, pour déterminer l'angle A1, un opérateur positionne à une distance L connue de l'écran de projection 30 un motif opaque ponctuel. Le calculateur commande l'éclairement de ce motif selon chacune des deux directions d'éclairement ainsi que la capture de deux images de l'écran de projection 3 0 comportant l'ombre portée de ce motif selon chaque direction d'éclairement. Le calculateur détermine ensuite par traitement de ces deux images, comme expliqué plus en détail ci-après, les coordonnées (X, Y) dans le plan de l'écran de projection 30 de chaque ombre portée dudit motif, et calcule la distance E entre elles. L'angle A1 est alors obtenu en appliquant la formule suivante : A1 = atan (E / L).

L'angle A1 est de préférence supérieur ou égal à 5 degrés.

Chaque image est par exemple enregistrée à l'aide d'un capteur CCD. Alternativement, elle peut être enregistrée avec tout type de capteur, et ensuite numérisée.

Chaque image se présente sous la forme d'une matrice de pixels de coordonnées connues dans le plan de l'image, chaque pixel comportant une information sur l'intensité lumineuse reçue par le capteur sur un élément de surface de base de ce capteur.

Le traitement d'une image capturée pour déterminer les coordonnées $(X_i, Y_i)$ avec i = 1A, 2A, 3A, 1B, 2B, 3B des ombres 31A, 32A, 33A, 31B, 32B, 33B portées de chaque repère 51, 52, 53 de la lentille ophtalmique 50, ou du motif utilisé pour l'étalonnage dans le plan de l'écran de projection 30, se fait par exemple selon les étapes suivantes. Le plan de l'écran de projection 30 est identifié au plan de l'image

Le calculateur 60 supprime tout d'abord les pixels dont l'intensité lumineuse est supérieure à une valeur seuil prédéterminée. Sont ainsi éliminées les zones de l'image éclairées directement par l'une des sources lumineuses 11, 12 et qui ne comportent donc pas l'ombre 31A, 32A, 33A, 31 B, 32B, 33B d'un repère 51, 52, 53 de la lentille ophtalmique 50. Les ensembles de pixels retenus présentent une intensité faible qui indique la présence d'une ombre sur l'écran de projection 30.

Le calculateur 60 détermine ensuite la forme de ces ensembles de pixels retenus et sélectionne parmi eux ceux qui présentent une forme correspondant à la forme attendue des ombres des repères 51, 52, 53 de la lentille ophtalmique 50.

Ici, les repères 51, 52, 53 présentent une forme ponctuelle, et leurs ombres 31A, 32A, 33A, 31 B, 32B, 33B présentent par conséquent une forme circulaire ou elliptique.

Le calculateur 60 détermine les coordonnées $(X_{Gi}, Y_{Gi})$ du barycentre de chaque ensemble de pixels sélectionné, et les identifie aux coordonnées $(X_i, Y_i)$ de chaque ombre 31A, 32A, 33A, 31 B, 32B, 33B dans le plan de l'écran de projection 30. Ces coordonnées $(X_i, Y_i)$ donnent la position de chaque ombre 31A, 32A, 33A, 31 B, 32B, 33B dans le plan de l'écran de projection 30.

Alternativement, pour des repères de forme non ponctuelle, comme par exemple les repères des lentilles progressives ou du frontofocomètre, ou le contour de la lentille ophtalmique ou des pastilles collées, le calculateur sélectionne les ensembles de pixels non circulaires présentant la forme attendue des ombres portées par ces repères de forme non ponctuelle.

Le calculateur 60 détermine alors la distance E1, E2, E3 entre les deux ombres 51A, 51 B, 52A, 52B, 53A, 53B d'un même repère 51, 52, 53 éclairé sous les deux directions d'éclairement.

Il vérifie également que deux ensembles de pixels identifiés comme les ombres 31A, 31 B, 32A, 32B, 33A, 33B portées d'un même repère 51, 52, 53 sur chaque image capturée correspondent bien à ce même repère 51, 52, 53 en vérifiant que cette distance E1, E2, E3 entre les deux ombres 51A, 51B, 52A, 52B, 53A, 53B d'un même repère 51, 52, 53 est inférieure à une valeur seuil prédéterminée. Le calculateur 60 vérifie également que ces deux ensembles de pixels présentent des formes similaires. Un tel calculateur 60 est décrit dans le livre « Digital Image Processing » écrit par W.K.Pratt, publié par Wiley-intersciences en 2001 (3ème édition), dans le chapitre 18.2.

Le calculateur 60 calcule la hauteur Z1, Z2, Z3 entre chaque repère 51, 52, 53 et l'écran 30 qui est égale à la distance E1, E2, E3 entre les deux ombres 51A, 51 B, 52A, 52B, 53A, 53B de ce repère 51, 52, 53 divisé par la tangente de l'angle A1 entre les deux directions d'éclairement.

Autrement dit: $Zr = Er / tan(A1)$, avec r = 1, 2, 3.

Connaissant la hauteur Z1, Z2, Z3 des repères 51, 52, 53 de la lentille ophtalmique 50, le calculateur 60 en déduit au moins ladite caractéristique géométrique de la lentille ophtalmique 50 relative à sa courbure.

Pour cela, le calculateur 60 détermine le rayon de courbure Rav de la face avant 55 de ladite lentille ophtalmique 50 en supposant que la géométrie de cette face avant 55 suit un modèle prédéterminé, par exemple qu'elle présente une forme sphérique.

La courbure Bav de la face avant 55 de la lentille ophtalmique 50 peut alors être obtenue à partir de ce rayon de courbure Rav, grâce à la formule $Bav = (n-1) / Rav$, où n est l'indice de réfraction de référence. L'indice de réfraction n de la lentille ophtalmique 50 est par exemple égale à 1,53 ou 1,523.

Selon un premier mode de mise en oeuvre, la lentille ophtalmique 50 est munie desdits trois repères 51, 52, 53 alignés selon un méridien de la lentille ophtalmique 50. La face avant 55 de la lentille ophtalmique 50 présentant ici une forme sphérique, ces trois repères 51, 52, 53 sont situés sur une sphère de rayon égal au rayon de courbure Rav de la face avant 55 de la lentille ophtalmique 50 et de centre C ayant pour coordonnées (XC,YC,ZC). Les coordonnées (X1,Y1,Z1), (X2,Y2,Z2) et (X3,Y3,Z3) des repères 51, 52, 53 vérifient donc les équations suivantes :

$$(X1-XC)^2+(Y1-YC)^2+(Z1-ZC)^2 = Rav^2$$

$$(X2-XC)^2+(Y2-YC)^2+(Z2-ZC)^2 = Rav^2$$

$$(X3-XC)^2+(Y3-YC)^2+(Z3-ZC)^2 = Rav^2.$$

De plus, les trois repères 51, 52, 53 étant alignés sur un méridien, leurs coordonnées dans le plan de l'écran de projection 30 vérifient également l'équation suivante :

$$(X1-X2)(Y2-Y3) - (Y1-Y2)(X2-X3) = 0.$$

Pour déterminer le rayon de courbure Rav de la face avant 55 de la lentille ophtalmique 50, le calculateur 60 résout ce système de quatre équations à quatre inconnues, ce qui permet de calculer les coordonnées XC, YC, ZC du centre de la sphère, ainsi que son rayon de courbure Rav. Il en déduit ensuite la courbure Bav de la face avant 55 de la lentille ophtalmique 50.

En variante, la lentille peut être munie d'un nombre différent de repères.

Par exemple, selon un second mode de réalisation dudit procédé, la face avant de la lentille ophtalmique est munie d'un repère unique. Celui-ci est alors disposé au voisinage de son sommet ou du centre de son pourtour.

Les coordonnées (Xa,Ya,Za) de ce repère, et donc du sommet de la lentille ophtalmique, sont déterminées par le calculateur d'après la méthode exposée précédemment.

La hauteur ZS du support de cette lentille ophtalmique par rapport à l'écran de projection étant connue par construction, pour une lentille ophtalmique dont le contour est de forme circulaire avec un rayon RL, comme dans le cas d'une lentille ophtalmique de présentation, le rayon de courbure Rav de la face avant de cette lentille ophtalmique vérifie l'équation suivante :

$$[Rav- (Za-ZS)]^2 + RL^2 = Rav^2.$$

Le rayon de courbure Rav de la face avant de cette lentille ophtalmique est calculé par le calculateur selon la formule suivante :

$$Rav = [(Za-ZS)^2+RL^2] / (Za-ZS).$$

Selon un troisième mode de réalisation dudit procédé, la face avant de la lentille est munie de deux repères dont les coordonnées sont notées (Xa,Ya,Za) et (Xb,Yb,Zb), l'un des deux repères est disposé au sommet de la lentille ophtalmique et l'autre à une position quelconque.

Les coordonnées (Xa,Ya,Za) et (Xb,Yb,Zb) de ces deux repères sont déterminées par le calculateur selon la méthode précédente. Le calculateur calcule ensuite le rayon de courbure Rav de la face avant de la lentille ophtalmique sphérique selon la formule suivante :

$$Rav = [(Za-Zb)^2 + (Xa-Xb)^2 + (Ya-Yb)^2] / (Za-Zb).$$

Selon un quatrième mode de réalisation dudit procédé, la face avant de la lentille ophtalmique est munie de quatre repères quelconques non alignés. Les coordonnées (X1,Y1,Z1), (X2,Y2,Z2), (X3,Y3,Z3) et (X4,Y4,Z4) de ces repères vérifient alors le système de quatre équations à quatre inconnues suivant :

$$(X1-XC)^2+(Y1-YC)^2+(Z1-ZC)^2 = Rav^2$$

$$(X2-XC)^2+(Y2-YC)^2+(Z2-ZC)^2 = Rav^2$$

$$(X3-XC)^2+(Y3-YC)^2+(Z3-ZC)^2 = Rav^2$$

$$(X4-XC)^2+(Y4-YC)^2+(Z4-ZC)^2 = Rav^2.$$

En résolvant ce système, le calculateur détermine les coordonnées (XC,YC,ZC) du centre de la sphère passant par la face avant de la lentille ophtalmique ainsi que son rayon Rav qui est le rayon de courbure de cette face avant.

Enfin, selon un cinquième mode de réalisation dudit procédé, la face avant de la lentille ophtalmique est munie de plus de quatre repères. Le calculateur peut alors prendre en compte un modèle de surface plus adapté pour la face avant 55 de la lentille ophtalmique, par exemple, un modèle sphérico-cylindrique. La courbure de la face avant de la lentille ophtalmique est alors déterminée de façon plus précise.

De préférence, le calculateur 60 est de plus adapté à calculer la valeur mesurée de la courbure de la face avant de la lentille ophtalmique 50 selon les cinq modes de réalisation décrit précédemment en tenant en outre compte de la puissance focale de celle-ci.

En effet, la puissance focale de la lentille ophtalmique 50, aussi appelée puissance sphérique ou puissance de réfraction induit une déviation prismatique locale des rayons lumineux la traversant, qui peut déformer et/ou décaler l'ombre 31A, 32A, 33A, 31 B, 32B, 33B de chaque repère 51, 52, 53.

Pour une lentille ophtalmique 50 de puissance focale positive par exemple, l'ombre 31A, 32A, 33A, 31 B, 32B, 33B d'un repère 51, 52, 53 donné sera plus proche de l'axe optique de la lentille ophtalmique 50 que le repère 51, 52, 53 correspondant. Si au contraire, la lentille ophtalmique 50 présente une puissance focale négative, cette ombre sera plus éloignée de l'axe optique de la lentille ophtalmique 50. Ce décalage augmente avec la puissance focale de la lentille ophtalmique 50 et la distance entre le repère 51, 52, 53 et l'axe optique de cette lentille ophtalmique 50.

Pour tenir compte de ce décalage, les coordonnées (Xi,Yi,Zi) calculées de chaque repère 51, 52, 53 sont corrigées par le calculateur 60 en fonction de la déviation prismatique locale des rayons lumineux passant par chaque repère 51, 52, 53, comme décrit dans le document WO2005/093495 ou son équivalent US2007146687.

Dans le cas du premier mode de réalisation du procédé, dans l'hypothèse d'une lentille ophtalmique unifocale de géométrie sphérico-cylindrique, les trois repères 51, 52, 53 étant situés sur le même méridien, et FM étant la distance focale de cette lentille ophtalmique selon ce méridien, égale à l'inverse de la puissance focale de cette lentille ophtalmique selon ce méridien, les coordonnées corrigées (Si,Ti,Ui) avec i=1A, 2A, 3A, 1 B, 2B, 3B de chaque ombre 31A, 32A, 33A, 31B, 32B, 33B sont calculées selon les formules suivantes :

$$Si = Xi * FM / (FM - Zi)$$

$$Ti = Yi * FM / (FM - Zi)$$

$$Ui = Zi.$$

Dans cet exemple, le centre optique de la lentille ophtalmique 50 présente des coordonnées nulles.

Le calculateur 60 détermine le rayon de courbure Rav et donc la courbure Bav de la face avant 55 de la lentille ophtalmique 50 selon le premier mode de réalisation du procédé décrit précédemment, avec une meilleure précision, car les coordonnées des ombres 31A, 32A, 33A, 31 B, 32B, 33B sont plus précises.

Dans le cas des autres modes de réalisation du procédé, dans lesquelles la lentille ophtalmique est munie de plusieurs repères non alignés sur un même méridien, le calculateur 60 détermine les coordonnées corrigées de chacun de ces repères grâce aux formules précédentes dans lesquelles la distance focale FM de la lentille ophtalmique selon le méridien passant par les trois repères lorsque ceux-ci sont alignés est remplacée par la distance focale locale FMi de la lentille ophtalmique le long du méridien passant par le repère correspondant.

La distance focale FMi de la lentille ophtalmique selon l'un des méridiens considérés peut être déterminée automatiquement au moyen d'une mesure optique, par exemple à l'aide d'une matrice de motifs présente sur le support de la lentille ophtalmique, comme décrit dans le document FR2878979 ou dans son équivalent US2007273870, saisie manuellement ou obtenue via une base de données.

En variante, afin de corriger la déviation prismatique locale par la lentille ophtalmique 50 des rayons lumineux passant par chaque repère 51, 52, 53, le calculateur 60 peut réaliser les étapes suivantes. Elles sont décrites ici dans le cas du premier mode de réalisation du procédé.

Le calculateur 60 modélise la face avant 55 de la lentille ophtalmique 50 par une surface S1 sphérique dont le rayon de courbure Rav correspond au rayon de courbure Rav déterminé par le premier mode de réalisation du procédé décrit précédemment. La face arrière 56 est modélisée par une surface S2 sphérico-cylindrique dont le rayon de courbure est noté Rar.

Ces deux surfaces S1, S2 sont séparées par une épaisseur EC au centre de la lentille ophtalmique 50. Celle-ci est réalisée dans un matériau d'indice n. Les paramètres EC et n de ce modèle de la lentille ophtalmique 50 peuvent être déterminés automatiquement au moyen d'une mesure optique, saisis manuellement par l'opticien ou obtenus via une base de données.

La puissance focale Pverre de cette lentille ophtalmique 50 selon le méridien passant par les trois repères 51, 52, 53 de sa face avant 55 est par exemple mesurée par la méthode de Hartmann, comme cela est décrit dans le document WO2005/093495 ou son équivalent US2007146687, mais elle peut également être saisie manuellement par l'opticien ou obtenue via une base de données.

Cette puissance focale Pverre vérifie l'équation suivante :

$$Pverre = Bav + Bar - EC/n*Bav*Bar ,$$

où $Bav = (n-1)/Rav$ et $Bar = (n-1)/Rar$ et désignent respectivement les courbures des faces avant 55 et arrière 56 de la lentille ophtalmique 50.

Le calculateur 60 utilise la valeur du rayon de courbure Rav de la face avant 55 de la lentille ophtalmique 50 déterminée par le premier mode de réalisation du procédé décrit précédemment, pour calculer Bav puis Bar et Rar d'après les formules suivantes :

$$Bar = (Pverre - Bav) / (1-(EC/n)*Bav)$$

$$Rar = (n-1) / Bar.$$

Le calculateur 60 calcule alors le trajet des rayons lumineux qui sont émis par au moins l'une des deux sources lumineuses 11, 12, qui traversent la lentille ophtalmique 50 ainsi modélisée et qui passent par les ombres projetées 31A, 32A, 32C, 31 B, 32B, 32C sur l'écran de projection 30, par une méthode de tracé des rayons lumineux bien connue de l'homme du métier. Le calculateur 60 en déduit de nouvelles valeurs plus précises des coordonnées (Xi, Yi, Zi) des repères 51, 52, 53 de la face avant 55 de la lentille ophtalmique 50.

Le calculateur 60 recalcule ensuite le rayon de courbure Rav et la courbure Bav de la face avant 55 de la lentille ophtalmique 50 suivant le premier mode de réalisation du procédé en utilisant ces nouvelles valeurs plus précises des coordonnées des repères 51, 52, 53. La nouvelle valeur de la courbure obtenue est alors plus précise.

Bien entendu, les étapes de cette variante peuvent être répétées un nombre de fois donné afin d'augmenter progressivement la précision de la valeur de la courbure de la face avant ainsi déterminée.

Les étapes de cette variante peuvent également être adaptées pour améliorer la précision de la valeur du rayon de courbure Rav de la face avant de la lentille ophtalmique déterminée par les autres modes de réalisation du procédé décrits précédemment.

Le calculateur 60 compare ensuite la valeur mesurée de la courbure Bav de la face avant 55 de la lentille ophtalmique 50 avec une valeur prédéterminée.

Le dispositif 100 comporte des moyens d'alerte visuels et/ou sonores, qui sont activés par le calculateur 60 lorsque ladite comparaison montre un écart entre les valeurs mesurée et prédéterminée supérieur à un seuil prédéterminé.

Ladite valeur prédéterminée peut correspondre à la courbure attendue de la face avant 55 de lentille ophtalmique 50 (par exemple, la courbure annoncée par le fabricant, ou la courbure commandée par l'opticien) ou à la courbure de la monture de lunettes sur laquelle la lentille ophtalmique 50 doit être montée.

Dans ce dernier cas, le seuil prédéterminé au-delà duquel une alerte est émise est déterminé en fonction de la capacité de la monture ou de la lentille ophtalmique à absorber l'écart de courbure entre la lentille ophtalmique et la monture.

Par exemple, lorsque la monture comporte des parties métalliques qui la rende peu déformable, un signal d'alerte est émis pour un écart de courbure relativement faible et le seuil prédéterminé est faible. Pour une monture présentant plus de souplesse, comme les montures en matière plastique ou les montures percées, le seuil prédéterminé est plus élevé.

Plus généralement, on définit, pour chaque type de monture (percée, rainée, cerclée) et pour chaque type de matériaux de cette monture, l'écart de courbure maximal permis et donc le seuil prédéterminé au-delà duquel une alerte est émise.

Cette comparaison est ici réalisée automatiquement par le calculateur 60 qui comporte par exemple une base de donnée stockant la courbure de la face avant 55 de la lentille ophtalmique 50 annoncée par le fabricant, commandée par l'opticien ou la courbure de la monture choisie.

La comparaison peut également être réalisée par l'opticien. Dans ce cas, le dispositif 100 comporte des moyens d'affichage sur lesquels s'affichent par exemple la courbure mesurée de la face avant 55 de la lentille ophtalmique 50 et ladite valeur prédéterminée.

En variante, le ou les repères de la lentille ophtalmique peuvent être disposés sur sa face arrière de la lentille ophtalmique. Les étapes des modes de réalisation du procédé selon l'invention sont inchangées mais ce sont le rayon de courbure et la courbure de la face arrière de la lentille ophtalmique qui sont alors déterminés.

Dans le cas d'une lentille ophtalmique de présentation, les courbures des faces avant et arrière de cette lentille sont identiques, tandis que dans le cas d'une lentille ophtalmique présentant une puissance focale, les courbures des faces avant et arrière sont différentes.

La connaissance de la courbure de la lentille ophtalmique permet de déterminer précisément la position des trous de perçage suivant la surface de cette lentille ophtalmique lorsque celle-ci est montée dans une monture du type percée. Ceci permet d'améliorer la position de report de ces trous lors du perçage de la lentille ophtalmique.

La connaissance de la courbure de la lentille ophtalmique permet également d'améliorer la précision de centrage, en prenant en compte cette courbure pour déterminer la position du point de centrage de la lentille ophtalmique dans la monture.

Enfin, elle permet d'améliorer la précision du positionnement du pion de préhension, en pilotant par exemple sa pose de telle sorte que les erreurs de positionnement liés à cette courbure soit corrigées, ou en pilotant la meuleuse de telle sorte que ces erreurs soient compensées lors du détourage de la lentille ophtalmique.

En variante, on peut éclairer la lentille ophtalmique munie de ses repères par au moins une source étendue de dimension caractéristique de préférence supérieure ou égale à 5 millimètres. On peut par exemple utiliser une source de forme annulaire.

## Revendications

**1.** Dispositif (100) pour mesurer au moins une caractéristique géométrique de courbure d'une lentille ophtalmique (50) munie sur au moins une de ses faces (55) d'au moins un repère (51, 52, 53), le dispositif (100) comportant un support (20) pour ladite lentille ophtalmique (50) et, de part et d'autre de ce support (20), d'une part, des moyens d'éclairement (10) de ladite lentille ophtalmique (50) selon au moins deux directions d'éclairement différentes et, d'autre part, des moyens d'acquisition et d'analyse (70) de la lumière transmise par ladite lentille ophtalmique (50), **caractérisé en ce que** lesdits moyens d'analyse étant adaptés à identifier des ombres (31A, 32A, 33A, 31B, 32B, 33B) dudit repère (51, 52. 53) éclairé sous lesdites au moins deux directions d'éclairement, et à déduire de leurs positions une valeur mesurée de ladite caractéristique géométrique de courbure de la lentille ophtalmique (50).

2. Dispositif (100) selon la revendication 1, comportant un écran de projection (30) et dans lequel lesdits moyens d'acquisition et d'analyse (70) sont adaptés à identifier des ombres (31A, 32A, 33A, 31B, 32B. 33B) dudit au moins un repère (51, 52, 53) projetées sur cet écran de projection (30) et à déduire des positions de ces ombres (31A, 32A, 33A, 31B, 32B, 33B) la valeur mesurée de ladite caractéristique géométrique de courbure.

3. Dispositif (100) selon l'une des revendications 1 et 2, dans lequel lesdits moyens d'éclairement (10) comportent au moins deux sources lumineuses (11, 12) ponctuelles.

4. Dispositif (100) selon la revendication 3, dans lequel chacune desdites sources lumineuses (11, 12) ponctuelles est collimatée en un faisceau lumineux orienté suivant l'une desdites directions d'éclairement.

5. Dispositif selon l'une des revendications 1 et 2, dans lequel lesdits moyens d'éclairement comportent une source lumineuse unique de dimension caractéristique supérieure à 5 millimètres.

6. Dispositif (100) selon l'une des revendications précédentes, dans lequel les moyens d'acquisition et d'analyse (70) sont adaptés à calculer la valeur mesurée de la caractéristique géométrique de courbure en fonction de la puissance de réfraction de la lentille ophtalmique (50) le long d'un méridien de cette lentille ophtalmique (50) passant par ledit repère (51, 52, 53).

7. Dispositif (100) selon l'une des revendications précédentes, dans lequel les moyens d'acquisition et d'analyse (70) sont adaptés à réaliser une comparaison de ladite valeur mesurée de la caractéristique géométrique de courbure de la lentille ophtalmique (50) avec une valeur prédéterminée.

8. Dispositif (100) selon la revendication précédente, comportant des moyens d'alerte qui sont activés lorsque ladite comparaison montre un écart entre les valeurs mesurée et prédéterminée supérieur à un seuil prédéterminé.

9. Procédé de mesure d'au moins une caractéristique géométrique de courbure d'une lentille ophtalmique (50), comportant les étapes suivantes :

- on munit ladite lentille ophtalmique (50) d'au moins un repère (51, 52, 53),
- on éclaire ladite lentille ophtalmique (50) selon au moins deux directions d'éclairement différentes,

**caractérisé en ce que**

- on acquiert des ombres (31A, 32A, 33A, 31B, 32B, 33B) des repères (51, 52, 53) sous lesdites au moins deux directions d'éclairement,
- on déduit de leurs positions une valeur mesurée de ladite caractéristique géométrique de courbure de la lentille ophtalmique (50).

10. Procédé selon la revendication précédente, dans lequel les ombres (31A, 32A, 33A, 31B, 32B, 33B) dudit au moins un repère (51, 52, 53) sont formées sur un écran de projection (30) et dans lequel on déduit, à partir, des positions de ces ombres (31A, 32A, 33A, 31B, 32B. 33B), la valeur mesurée de ladite caractéristique géométrique de courbure de la lentille ophtalmique (50).

11. Procédé selon l'une des revendications 9 et 10, dans lequel on munit ladite lentille ophtalmique d'au moins un repère situé au sommet de ladite lentille ophtalmique ou au centre de son pourtour.

12. Procédé selon l'une des revendications 9 et 10, dans lequel on munit ladite lentille ophtalmique (50) de trois repères (51, 52, 53) alignés selon un méridien de celle-ci.

13. Procédé selon l'une des revendications 9 et 10, dans lequel on munit ladite lentille ophtalmique d'au moins quatre repères quelconques.

14. Procédé selon l'une des revendications 9 à 13, comportant les étapes suivante :

- on compare la valeur mesurée de ladite caractéristique géométrique de courbure avec une valeur prédéterminée, et
- on émet un signal d'alerte lorsque ladite comparaison montre un écart entre les valeurs mesurée et prédéterminée supérieur à un seuil prédéterminé.

**Patentansprüche**

1. Vorrichtung (100) zum Messen wenigstens einer geometrischen Charakteristik der Krümmung einer ophthalmischen Linse (50), die auf wenigstens einer ihrer Flächen (55) mit wenigstens einem Bezugspunkt (51, 52, 53) versehen ist, wobei die Vorrichtung (100) einen Träger (20) für die ophthalmische Linse (50) und beiderseits dieses Trägers (20) einerseits Mittel (10) zum Beleuchten der ophthalmischen Linse (50) längs wenigstens zweier verschiedener Beleuchtungsrichtungen und andererseits Mittel (70) zum Erfassen und Analysieren des von der ophthalmischen Linse (50) durchgelassenen Lichts umfasst, **dadurch gekennzeichnet, dass** die Analysemittel dafür ausgelegt sind, Schatten (31A, 32A, 33A, 31B, 32B, 33B) des unter den wenigstens zwei Beleuchtungsrichtungen beleuchteten Bezugspunkts (51, 52, 53) zu identifizieren und aus ihren Positionen einen Messwert der geometrischen Charakteristik der Krümmung der ophthalmischen Linse (50) abzuleiten.

2. Vorrichtung (100) nach Anspruch 1, die einen Projektionsschirm (30) umfasst und wobei die Erfassungs- und Analysemittel (70) dafür ausgelegt sind, Schatten (31A, 32A, 33A, 31B, 32B, 33B) des wenigstens einen Bezugspunkts (51, 52, 53), die auf diesen Projektionsschirm (30) projiziert werden, zu identifizieren und aus Positionen dieser Schatten (31A, 32A, 33A, 31B, 32B, 33B) den Messwert der geometrischen Charakteristik der Krümmung abzuleiten.

3. Vorrichtung (100) nach einem der Ansprüche 1 und 2, wobei die Beleuchtungsmittel (10) wenigstens zwei punktförmige Lichtquellen (11, 12) umfassen.

4. Vorrichtung (100) nach Anspruch 3, wobei jede der punktförmigen Lichtquellen (11, 12) in ein Lichtstrahlenbündel, das längs einer der Beleuchtungsrichtungen orientiert ist, parallel gerichtet ist.

5. Vorrichtung nach einem der Ansprüche 1 und 2, wobei die Beleuchtungsmittel eine einzige Lichtquelle mit einer charakteristischen Abmessung von mehr als 5 Millimetern umfassen.

6. Vorrichtung (100) nach einem der vorhergehenden Ansprüche, wobei die Erfassungs- und Analysemittel (70) dafür ausgelegt sind, den Messwert der geometrischen Charakteristik der Krümmung als Funktion der Brechungsleistung der ophthalmischen Linse (50) längs eines Meridians dieser ophthalmischen Linse (50), der durch den Bezugspunkt (51, 52, 53) verläuft, zu berechnen.

7. Vorrichtung (100) nach einem der vorhergehenden Ansprüche, wobei die Erfassungs- und Analysemittel (70) dafür ausgelegt sind, einen Vergleich des Messwerts der geometrischen Charakteristik der Krümmung der ophthalmischen Linse (50) mit einem vorgegebenen Wert auszuführen.

8. Vorrichtung (100) nach dem vorhergehenden Anspruch, die Warnmittel umfasst, die aktiviert werden, wenn der Vergleich einen Abstand zwischen dem gemessenen und dem vorgegebenen Wert, der größer als ein vorgegebener Schwellenwert ist, zeigt.

9. Verfahren zum Messen wenigstens einer geometrischen Charakteristik der Krümmung einer ophthalmischen Linse (50), das die folgenden Schritte umfasst:

   - Versehen der ophthalmischen Linse (50) mit wenigstens einem Bezugspunkt (51, 52, 53),
   - Beleuchten der ophthalmischen Linse (50) längs wenigstens zweier verschiedener Beleuchtungsrichtungen, **dadurch gekennzeichnet, dass**
   - Schatten (31A, 32A, 33A, 31B, 32B, 33B) der Bezugspunkte (51, 52, 53) unter den wenigstens zwei Beleuchtungsrichtungen erfasst werden,
   - aus ihren Positionen ein Messwert der geometrischen Charakteristik der Krümmung der ophthalmischen Linse (50) abgeleitet wird.

10. Verfahren nach dem vorhergehenden Anspruch, wobei die Schatten (31A, 32A, 33A, 31B, 32B, 33B) des wenigstens einen Bezugspunkts (51, 52, 53) auf einem Projektionsschirm (30) gebildet werden und wobei anhand der Positionen dieser Schatten (31A, 32A, 33A, 31B, 32B, 33B) der Messwert der geometrischen Charakteristik der Krümmung der ophthalmischen Linse (50) abgeleitet wird.

11. Verfahren nach einem der Ansprüche 9 und 10, wobei die ophthalmische Linse mit wenigstens einem Bezugspunkt versehen ist, der sich im Scheitelpunkt der ophthalmischen Linse oder im Zentrum ihres Umfangs befindet.

12. Verfahren nach einem der Ansprüche 9 und 10, wobei die ophthalmische Linse (50) mit drei Bezugspunkten (51, 52, 53) versehen ist, die längs ihres Meridians ausgerichtet sind.

13. Verfahren nach einem der Ansprüche 9 und 10, wobei die ophthalmische Linse mit wenigstens vier beliebigen Bezugspunkten versehen ist.

14. Verfahren nach einem der Ansprüche 9 bis 13, das die folgenden Schritte umfasst:

- Vergleichen des Messwerts der geometrischen Charakteristik der Krümmung mit einem vorgegebenen Wert und
- Aussenden eines Warnsignals, wenn der Vergleich einen Abstand zwischen dem gemessenen und dem vorgegebenen Wert, der größer als ein vorgegebener Schwellenwert ist, zeigt.

**Claims**

1. Device (100) for measuring at least one curvature geometrical characteristic of an ophthalmic lens (50) provided on at least one of its faces (55) with at least one position-identifying mark (51, 52, 53), the device (100) comprising a support (20) for said ophthalmic lens (50), and on opposite sides of said support (20), firstly lighting means (10) for lighting said ophthalmic lens (50) along at least two different lighting directions, and secondly acquisition and analysis means (70) for acquiring and analyzing the light transmitted by said ophthalmic lens (50), **characterized in that** said analysis means being adapted to identify shadows (31A, 32A, 33A, 31B, 32B, 33B) of said mark (51, 52, 53) when lighted in said at least two lighting directions, and to deduce from their positions a measured value for said curvature geometrical characteristic of the ophthalmic lens (50).

2. Device (100) according to claim 1, including a projection screen (30) and in which said acquisition and analysis means (70) are adapted to identify shadows (31A, 32A, 33A, 31B, 32B, 33B) of said at least one mark (51, 52, 53) projected on said projection screen (30) and to deduce from the positions of said shadows (31A, 32A, 33A, 31B, 32B, 33B) the measured value of said curvature geometrical characteristic.

3. Device (100) according to claim 1 or 2, wherein said lighting means (10) include at least two point light sources (11, 12).

4. Device (100) according to claim 3, wherein each of said point light sources (11, 12) is collimated to form a light beam oriented along one of said lighting directions.

5. Device (100) according to claim 1 or 2, wherein said lighting means comprise a single light source with a characteristic dimension greater than 5 millimeters.

6. Device (100) according to any of the preceding claims, wherein the acquisition and analysis means (70) are adapted to calculate the measured value of the curvature geometrical characteristic as a function of the refractive power of the ophthalmic lens (50) along a meridian of said ophthalmic lens (50) passing via said mark (51, 52, 53).

7. Device (100) according to any of the preceding claims, wherein the acquisition and analysis means (70) are adapted to compare said measured value of the curvature geometrical characteristic of the ophthalmic lens (50) with a predetermined value.

8. Device (100) according to the previous claim, including warning means that are activated when said comparison shows a difference between said measured and predetermined values that exceeds a predetermined threshold.

9. Method of measuring at least one curvature geometrical characteristic of an ophthalmic lens (50), the method comprising the following steps:

providing said ophthalmic lens (50) with at least one position-identifying mark (51, 52, 53);

lighting said ophthalmic lens (50) along at least two different lighting directions;

**characterized in that** it further comprises the steps:

acquiring shadows (31A, 32A, 33A, 31B, 32B, 33B) of the marks (51, 52, 53) on said at least two lighting directions; and

deducing from their position a measured value for said curvature geometrical characteristic of the ophthalmic lens (50).

10. Method according to the preceding claim, wherein the shadows (31A, 32A, 33A, 31B, 32B, 33B) of said at least one mark (51, 52, 53) are formed on a projection screen (30), and wherein the measured value of said curvature geometrical characteristic of the ophthalmic lens (50) is deduced from the positions of said shadows (31A, 32A, 33A, 31B, 32B, 33B).

11. Method according to claim 9 or 10, wherein said ophthalmic lens is provided with at least one mark situated at the top of said ophthalmic lens or at the center of its outline.

12. Method according to claim 9 or 10, wherein said ophthalmic lens (50) is provided with three marks (51, 52, 53) in alignment on a meridian thereof.

13. Method according to claim 9 or 10, wherein said ophthalmic lens is provided with at least four marks in arbitrary positions.

14. A method according to anyone of claims 9 to 13, including the following steps:

comparing the measured value for said curvature geometrical characteristic with a predetermined value; and issuing a warning signal when said comparison reveals a difference between the measured and predetermined values that is greater than a predetermined threshold.

Fig.1

Fig.2

EP 2 194 367 B1

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2052153 A
- EP 1605241 A
- FR 2878979
- US 2007273870 A
- WO 2005093495 A
- US 2007146687 A

**Littérature non-brevet citée dans la description**

- **W.K.PRATT.** Digital Image Processing. Wiley-inter-sciences, 2001